# EUROPÄISCHE PATENTSCHRIFT

(11) **EP 0 603 813 B1**
(45) Veröffentlichungstag und Bekanntmachung des Hinweises auf die Patenterteilung: **20.03.2002**
(21) Anmeldenummer: 93120576.9
(22) Anmeldetag: 21.12.1993
(51) Int. Cl.: C08G 69/36

(54) **Formkörper aus Copolyamiden mit langkettigen Polyamideinheiten**
Mouldings of copolyamides with long polyamide segments
Masses à mouler à base de polyamides avec des segments longs de polyamide

(30) Priorität: 24.12.1992 CH 395692
(43) Veröffentlichungstag der Anmeldung: 29.06.1994
(73) Patentinhaber: EMS-INVENTA AG, 8001 Zürich (CH)
(72) Erfinder: Dalla Torre, Hans, Dr. phil., CH-7013 Domat/Ems (CH); Hewel, Manfred, Dr. rer. nat., CH-7415 Rodels (CH)
(74) Vertreter: Becker Kurig Straus

(56) Entgegenhaltungen:
- DE-A- 1 745 466
- FR-A- 2 575 756
- GB-A- 2 006 797
- US-A- 4 232 145
- US-A- 4 268 661

## Beschreibung

Die Erfindung betrifft transparente Copolyamide mit langkettigen Monomerbausteigemäß Patentanspruch 1. Sie betrifft insbesonders Copolyamide, die neben ihrer ausgezeichneten Transparenz eine besonders hohe Zähigkeit, eine hervorragende Lösungsmittel-Beständigkeit und eine sehr geringe Wasseraufnahme aufweisen. Die Erfindung betrifft die Verwendung der Copolyamide zur Herstellung von Formkörpen.

Diese Formkörper finden Verwendung als Hohlkörper, Platten, Stangen, Rohre, Ueberzüge, Folien oder Fasern, so z.B. als Schutz- oder Abdeckteile bzw. als Leitungen in Apparaten und Instrumenten, in Geräten und Leitungssystemen, als Druckbehälter für Flüssigkeiten und Gase, als scheuer- und schlagfeste Überzüge oder Verkleidungen von Bedarfs- und Sportgeräten oder als mechanisch beständige Bauteile für medizinische und modische Artikel oder solche für den Lebensmittelgebrauch sowie als Folien oder Fasern.

EP-A-313436 betrifft transparente thermoplastische Polyamide, welche aus einem meist langkettigen Lactam, aus Terephthalsäure und/oder Isophthalsäure und einem meist substituierten cycloaliphatischen Diamin hergestellt werden. Diese Copolyamide sind relativ steif, besitzen eine hohe Wärmeformbeständigkeit, sind aber wenig zäh und lösungsmittelbeständig. Ausserdem weisen sie eine hohe Schmelzviskosität auf, welche die Verarbeitung erschwert.

Ein weiteres transparentes Copolyamid beschreibt EP-A-423 472. Dieses Copolyamid besitzt eine gute Beständigkeit gegenüber Alkoholen und kochendem Wasser und wird aus Decamethylendiamin, Trimethylhexamethylendiamin, Dicycan und Terephthalsäure und/oder Isophthalsäure polykondensiert. Auch dieses Copolyamid besitzt eine limitierte Anwendung wegen der ungenügenden Schlagzähigkeit vor allem bei tiefen Temperaturen und der verwendeten teuren Rohstoffe.

In GB-A-2,129,370 wird eine Mehrschicht-Folie für Lebensmittelverpackungen beschrieben, deren eine Schicht aus Vinylalkohol-Copolymeren besteht und die andere als Deckschicht aus mehrheitlich aliphatischen Polyamiden, welche aus verschiedenen Monomeren wie Lactamen, langkettigen aliphatischen Dicarbonsäuren und/oder Terephthalsäure oder Isophthalsäure und aliphatischen Diaminen, bzw. Xylilendiamin hergestellt werden. Diese Polyamide sind zwar flexibel, aber teilkristallin, also nicht transparent, und eignen sich speziell für die Lebensmittelverpackung, denn sie besitzen eine gute Sauerstoffbarriere im Gegensatz zu Produkten auf Basis PA 12.

JP-A-63120645 beschreibt ein 3-Schicht-Laminat, bei welchem eine Schicht aus Polycarbonat und die andere Schicht aus einem teilkristallinen Polyamid gebildet wird, welches zu 100 bis 60% aus aliphatischen Diaminen und Terephthalsäure oder Isophthalsäure und zu bis 40% aus Lactamen oder aliphatischen Diaminen und aliphatischen Dicarbonsäuren hergestellt ist, das aufgrund der guten Barrierewirkung gegen Sauerstoff und Kohlensäure für Getränkeflaschen eingesetzt werden kann. Diese Produkte sind mehrheitlich aus Caprolactam und Hexamethylendiamin und Terephthalsäure oder Isophthalsäure aufgebaut und müssen die hohen Schmelzviskositäten des Polycarbonats aufweisen, um die erforderliche mechanische Festigkeit für Getränkeflaschen zu erreichen.

In JP-A-62290725 werden Hohlkörper für Verpackungen aus Polyamiden beschrieben, welche zu 75-100% aus aliphatischen Diaminen, Isophthalsäure oder Terephthalsäure und zu 25-0% aus Lactamen oder alphatischen Diaminen und aliphatischen Dicarbonsäuren polykondensiert werden. Die zur Anwendung kommenden Monomere Hexamethylendiamin, Terephthalsäure, Isophthalsäure und Caprolactam verleihen dem Polyamid gute Barriereeigenschaften, jedoch ist die Migration der Monomeren störend, ausserdem zeigen die Produkte eine relativ hohe Feuchtigkeitsaufnahme.

Dasselbe gilt für JP-A-62143969 welche blasgeformte, transparente Folien aus Polyamiden beschreibt, welche zu 10%-100% aus aliphatischen Diaminen, Isophthalsäuren oder Terephthalsäure und zu 90%-0% aus Polyamiden aus kurzkettigen Lactamen oder aliphatischen Diaminen oder aliphatischen Dicarbonsäuren bestehen.

US-A-4,232,145 und US-A-4,268,661 beschreiben Copolyamide mit Tg's von 140 bis 170°C, bestehend aus 30-40 Gew.-% Laurinlactam oder ω-Aminolaurinsäure oder einem Paar 12er Dicarbonsäure/12-Diamin (aliphatisch) und 70-60 Gew.-% eines Salzpaares aus nur bicyclischen (aliphatischen) Diaminen und Isophthalsäure, welche bis zu 50% durch Terephthalsäure ersetzt sein kann und bis zu 15% durch andere Dicarbonsäuren. In der US-A-4,232,145 besteht das Diamin ausschließlich aus einem cycloaliphatischen Diamin.

GB-A-2 006 797 beschreibt im wesentlichen transparente Homopolyamide, welche durch Polykondensation hergestellt worden sind aus Terephthalsäure oder einem Amid-bilden dem Derivat davon und einem definierten cycloaliphatischen Diamin, welches ein mittleres Kettenglied von -(CH₂)₈ besitzt und welches an den zwei daran benachbarten -CH-Atom in Gruppen mit C₄-C₁₂ Cycloalkyl-Ringen substituiert ist. Dieses Diamin kann auch teilweise substituiert sein mit ω-Aminocarbonsäuren C₅-C₁₁ bzw. entsprechenden Lactamen oder durch aliphatische Säure/Diaminepaare C₄-C₁₀ bzw. C₆-C₁₂ und wird dadurch erst zum Copolyamid.

FR-A-2 575 756 beschreibt transparente Copolyamide, die aus 20-60 Gew.-% Aminocarbonsäuren mit 9 bis 12 C Atomen bzw. Lactamen, Isophthalsäure und Bis-(4-Amino-3,5-diethylcyclohexyl)-methan aufgebaut sind.

Eine wichtige Forderung für amorphe hochtransparente Polyamide sind hohe Zähigkeit und Spannungsrissbeständigkeit gegen wässerige und organische Lösungsmittel. Diese Eigenschaften sind bisher neben hoher Festigkeit und Steifheit nicht in befriedigendem Masse erreicht worden.

Es ist daher Aufgabe der Erfindung, parente Copolyamide für Formkörper herzustellen, das einerseits besonders steif, fest und kälteschlagzäh ist, andererseits gute Lösungsmittelbeständigkeit aufweist und ausserdem infolge niedriger Wasseraufnahme geringfügige Aenderungen der mechanischen Eigenschaften im konditionierten Zustand zeigt.

Die Aufgabe wird durch die transparenten Copolyamide mit dem kennzeichnenden Merkmalen des Anspruchs 1 und die Verwendung der Copolyamide nach Anspruch 2 gelöst. Sie wird besonders dadurch gelöst, dass die Formkörper aus einem Copolyamid bestehen, welches aus einer ausgewählten Kombination von langkettigen und kurzkettigen Monomeren polykondensiert wird und dass sie einerseits gute Transparenz, andererseits genügende Steifheit, Festigkeit und hohe Zähigkeit aufweisen, die im konditionierten Zustand nur wenig ändern.

Langkettige Monomere der für die erfindungsgemässen Formkörper verwendeten Copolyamide und damit für die Formkörper selbst sind einerseits 90 bis 45 Gew.-Teile Laurinlactam oder die entsprechenden ω-Aminocarbonsäuren mit 9 bis 12 C-Atomen z.B. ω-Aminolaurinsäure und

andererseits weitere Monomere, wie sie für teilaromatische Polyamide eingesetzt werden, in 10 bis 55 Gew.-Teilen, bestehend aus mindestens einem Diamin (b₁)der Formel:

H₂N - R - NH₂,

in dem R ein geradkettiger aliphatischer Rest mit 2 bis 12 C-Atomen sein kann,
und aus, in nahezu äquimolarem Verhältnis zum Diamin, Terephtalsäure.

Die erfindungsgemässen Copolyamide weisen eine statistische Verteilung der Monomerbausteine auf. Sie zeichnen sich durch hohe Transparenz aus, obwohl einige einen Schmelzpunkt besitzen. Andererseits liegt der Glasumwandlungspunkt T_{G} bei 30 - 130°C. Sie zeigen sehr hohe Zähigkeit bei Raumtemperatur und bei Temperaturen bis -40°C und ausgesprochen gute Beständigkeit gegen Lösungsmittel wie Methanol, Isopropanol, Aceton, n-Hexan, Toluol oder neutrale sowie saure und alkalische wässrige Lösungsmittel.

Die Festigkeit und Steifheit sind innerhalb weiter Grenzen einstellbar, so kann z.B. der Zug E-Modul (DIN 53457) zwischen 1000 und 2300 N/mm² oder die Wärmeformbeständigkeit zwischen 50°-100°C variert werden.

Die Copolyamide der erfindungsgemässen Formkörper können selbstverständlich in üblicher Weise mit weiteren Homopolyamiden, bevorzugt mit PA 6, PA 11 oder PA 12 oder mit elastomeren Copolyamiden, aber auch mit anderen handelsüblichen Polyamiden bevorzugt zu transparenten Blendes legiert werden, wodurch in bevorzugter Weise bessere Entformbarkeit und Flexibilität erreicht wird. Sie können auch die nach dem Stand der Technik bekannten verwendungsbedingten Additive, z.B. Pigmente, Stabilisatoren, Verstärkungsfasern, Füllstoffe u.ä. enthalten.

Die erfindungsgemässen Formkörper sind bevorzugt ausgewählt aus der Gruppe Hohlkörper, Platten, Stangen, Rohre, Folien, Schutzschichten und Fasern.

Die beschriebenen transparenten Copolyamide werden durch das folgende Beispiel erläutert:

### Beispiel 1

In einer Ausführungsform der Erfindung wurden in einem Autoklaven mit 150 l Inhalt 17,5 kg Laurinlactam, 5,0 kg Hexamethylendiamin, 7,0 kg Terephthalsäure, 0,120 kg Essigsäure und 0,10 kg phosphorige Säure zusammen mit 5 kg Wasser eingefüllt und unter Druck auf 295°C erhitzt. Nach einer Entspannungs- und Entgasungsphase wurde das Produkt mittels einer Spinnpumpe als Strang abgezogen, gekühlt und granuliert. Die von getrockneten, transparenten Granulat mittels Spritzgussmaschine hergestellten transparenten Prüflinge besassen folgende Eigenschaften:

| | | | | |
|---|---|---|---|---|
| Schmelzviskosität | (270°/122.6 N) | | Pa.s | 460 |
| TG und Schmelzpunkt | | | °C | 65 und 223 |
| Schlagzähigkeit | | (DIN 53453) | | 40% OB |
| | | | KJ/m² | 60% 24 |
| Kerbschlagzähigkeit, | 23°C/tro, | (DIN 53453) | KJ/m² | 6,2 |
| Reissfestigkeit | " " | (DIN 53455) | N/mm² | 56 |
| Reissdehnung | " " | (DIN " ) | % | 75 |
| Zug-E-Modul | " " | (DIN 53457) | N/mm² | 1900 |

In Tabelle I sind die Copolyamide der erfindungsgemässen Formkörper mit ihrer vorteilhaften Kombination der Eigenschaften verschiedenen handelsüblichen transparenten Copolyamiden und dem nichttransparenten Polyamid 12 gegenübergestellt.

**Tabelle I:**

| Eigenschaftsvergleich amorpher copolyamide | | | | |
|---|---|---|---|---|
| | Grilamid® | Trogamid® | Christamid® | CoPA 12/6T |
| | Typ TR 55 EMS-CHEMIE AG | Typ T Dynamit/Nobel jetit Hüls AG | Typ HS 1100 HS 1100 ATO Chem | erfindungsgemäss |
| Kerbschlagzähigkeit 23°C/tro (DIN 53453) | 5 kg/m² | 3-4 | 2-3 | 13-10 |
| Kerbschlagzähigkeit - 40°C/tro (DIN 53453) | 3 kg/m² | 2-3 | 1.5-2 | 30-8 |
| Zug-E Modul 23°C/tro (DIN 53455) | 2300 N/mm² | 3200 | 1800 | 1000-2300 |
| Reissdehnung 23°C/tro (DIN 53455) | 50-150 % | 60 | 60-170 | 200-230 |
| Spannungsrissbeständigkeit in Aethanol (100%) und Isopropanol (DIN 53449 T₃) | nicht beständig * | nicht beständig * | nicht beständig * | beständig ** |

| | | | | |
|---|---|---|---|---|
| * nach wenigen Sekunden Bruch. | | | | |
| ** nach mehr als 60 Sekunden kein Bruch | | | | |

## Patentansprüche

1. Transparente Copolyamide mit einer Glasübergangstemperatur von 30 bis 130°C, **dadurch gekennzeichnet, daß** sie aufgebaut sind aus:
(a) 90 bis 45 Gew.-Teilen Laurinlactam, das ersetzt sein kann durch ω -Aminocarbonsäuren mit 9 bis 12 C-Atomen
(b) 55 bis 10 Gew.-Teilen von weiteren Monomeren für teilaromatische Polyamide, bestehend aus mindestens einem Diamin (b₁) der Formel
H₂N―R―NH₂,
in dem R ein geradkettiger aliphatischer Rest mit 2 bis 12 C-Atomen ist, und aus, in nahezu äquimolarem Verhältnis zum Diamin, Terephthalsäure.

2. Verwendung der Copolyamide gemäß Anspruch 1 zur Herstellung von Formkörpern.

3. Verwendung gemäß Anspruch 2, **dadurch gekennzeichnet, daß** die Formkörper ausgewählt sind aus den Gruppen Hohlkörper, Platten, Stangen, Rohre, Folien, Schutzschichten und Fasern.

## Claims

1. Transparent copolyamides with a glass transition temperature of from 30 to 130°C, **characterized in that** they have been built up from:
(a) from 90 to 45 parts by weight of laurolactam, which may have been replaced by ω-aminocarboxylic acids having from 9 to 12 carbon atoms
(b) from 55 to 10 parts by weight of other monomers for partly aromatic polyamides, composed of at least one diamine (b₁) of the formula
H₂N-R-NH₂.
where R is a straight-chain aliphatic radical having from 2 to 12 carbon atoms, and of terephthalic acid in an almost equimolar ratio to the diamine.

2. Use of the copolyamides according to Claim 1 for producing mouldings.

3. Use according to Claim 2, **characterized in that** the mouldings have been selected from the groups of hollow articles, sheets, rods, tubes, films, protective layers and fibres.

## Revendications

1. Copolyamides transparents avec une température de transition vitreuse de 30 à 130°C, **caractérisés en ce qu'**ils, sont constitués de :
(a) 90 à 45 parties en poids de lactame laurique qui peut être remplacer par des acides ω-amino-carboxyliques ayant 9 à 12 atomes de C,
(b) 55 à 10 parties en poids d'autres monomères pour des polyamides partiellement aromatiques constitués d'au moins une diamine (b₁) de formule :
H₂N - R - NH₂,
dans laquelle R est un résidu aliphatique à chaîne droite ayant 2 à 12 atomes de C et d'acide téréphtalique dans une proportion à peu près équimolaire par rapport à la diamine.

2. Utilisation de copolyamides selon la revendication 1 pour préparer des corps moulés.

3. Utilisation selon la revendication 2, **caractérisée en ce que** les corps moulés sont choisis dans le groupe formé par les corps creux, les plaques, les barreaux, les tubes, les feuilles, les couches protectrices et les fibres.
